Europäisches Patentamt

European Patent Office

Office européen des brevets

(11) Numéro de publication: **0 395 493**
**A1**

## (12) DEMANDE DE BREVET EUROPEEN

(21) Numéro de dépôt: 90401102.0

(22) Date de dépôt: 24.04.90

(51) Int. Cl.5 **F16B 5/07**

(30) Priorité: **27.04.89 FR 8906663**

(43) Date de publication de la demande:
**31.10.90 Bulletin 90/44**

(84) Etats contractants désignés:
**AT BE CH DE DK ES FR GB GR IT LI LU NL SE**

(71) Demandeur: **Mellina, Joseph**
**23 Boulevard Michel Servet**
**F-26100 Romans(FR)**

(72) Inventeur: **Mellina, Joseph**
**23 Boulevard Michel Servet**
**F-26100 Romans(FR)**

(54) Moyens d'assemblage des éléments d'une plaque rigide ou semi-rigide.

(57) Ces moyens comprennent une pièce d'assemblage (4,11,16) dont le centre est destiné à coïncider avec le centre de la plaque (1) et qui porte autant d'organes d'accrochage (5,14) que la plaque (1) comporte d'éléments (2,10,15), organes d'accrochage (5,14) qui sont aptes à coopérer avec des organes d'accrochage complémentaires (6,17) solidaires des éléments (2,10,15), ces derniers ayant une forme telle que leurs lignes d'assemblage convergent au centre de la plaque (1).

Applicables notamment à l'assemblage de plaques de jeux de société.

FIG.1

# MOYENS D'ASSEMBLAGE DES ELEMENTS D'UNE PLAQUE RIGIDE OU SEMI-RIGIDE

La présente invention se rapporte à des moyens d'assemblage des éléments d'une plaque rigide ou semi-rigide destinée à constituer notamment la plaque d'un jeu de société.

Ces plaques sont généralement de grandes dimensions et doivent être pliées pour rentrer dans la boîte d'emballage du jeu. On connaît d'employer, pour les réaliser, un matériau semi-rigide et de faible épaisseur, tel que du carton rainé pouvant être plié, mais qui présente l'inconvénient de ne pas conférer une très bonne présentation au jeu et d'empêcher l'obtention d'une surface parfaitement plane du fait du manque de souplesse de la ou des pliures. Le plus souvent, on utilise du carton fort ou de la matière plastique pour réaliser les éléments constituant la plaque, ces éléments étant articulés les uns aux autres afin de permettre le repliage de la plaque, au moyen de bandes de tissu ou de papier chevauchant leurs bords contigus. Ce type d'assemblage présente les inconvénients d'être difficiles à réaliser et par conséquent d'un prix de revient élevé, ce qui limite le nombre d'articulations et donc le nombre d'éléments, et impose d'augmenter la surface de chacun d'eux et les dimensions de la boîte d'assemblage, grevant de ce fait son prix de revient. De plus, les bandes précitées s'usent et peuvent, à la longue, se déchirer ou se décoller. Enfin, on ne peut pas déplacer facilement la plaque sans risquer, du fait de l'articulation des éléments la constituant, de faire tomber les pions, cartes ou dés qu'elle porte.

La présente invention vise à remédier à ces inconvénients en fournissant des moyens simples, résistants, efficaces et peu onéreux d'assemblage d'éléments d'une plaque rigide ou semi-rigide qui ne limitent pas le nombre d'éléments assemblables et qui permettent non seulement la réduction des dimensions, et par conséquent du prix de leur boîte d'emballage, mais aussi un déplacement aisé de la plaque une fois assemblée.

A cette fin, ces moyens comprennent une pièce d'assemblage dont le centre est destiné à coïncider avec le centre de la plaque et qui porte autant d'organes d'accrochage que la plaque comporte d'éléments, organes d'accrochage qui sont aptes à coopérer avec des organes d'accrochage complémentaires solidaires des éléments, ces derniers ayant une forme telle que leurs lignes d'assemblage convergent au centre de la plaque.

Les éléments ne sont donc pas articulés deux à deux, mais assemblés les uns aux autres grâce à la pièce centrale d'assemblage dont le nombre d'organes d'accrochage est illimité, ce qui permet d'augmenter à volonté le nombre d'éléments de la plaque et de diminuer la surface de chacun d'eux.

Les lignes d'assemblage des éléments convergent au centre de la plaque, de sorte que chaque élément forme un angle d'assemblage.

Avantageusement, les moyens selon l'invention comprennent, en outre, une pièce de verrouillage, en position assemblée, des éléments de plaque.

Suivant une forme de réalisation de l'invention, les organes d'accrochage sont constitués par des doigts en saillie sur l'une des faces de la pièce d'assemblage perpendiculairement à celle-ci, et l'organe d'accrochage complémentaire dont est pourvu chaque élément est constitué par un trou engageable, en force sur l'un des doigts précités lorsqu'il est positionné correctement par rapport aux autres éléments de la plaque.

L'engagement en force des trous des éléments sur les doigts suffit à réaliser l'assemblage des éléments à la pièce précitée.

De préférence, la pièce de verrouillage présente la même forme que la pièce d'assemblage, ou une forme similaire et elle est munie de trous ayant la même répartition que les doigts d'accrochage portés par la pièce d'assemblage et dont chacun est destiné à être engagé en force sur l'un d'eux jusqu'à ce que les faces en vis-à-vis de la pièce de verrouillage et des éléments soient au contact l'une de l'autre.

L'assemblage est ainsi renforcé, sans jeu possible des éléments par rapport aux moyens d'assemblage.

Selon une variante de réalisation de ces moyens d'assemblage, les organes d'accrochage de la pièce d'assemblage sont constitués par des ergots saillants perpendiculairement à son plan et régulièrement disposés à sa périphérie, et les organes d'accrochage complémentaires des éléments de la plaque sont constitués par des paires d'encoches ménagées sur les bords d'assemblage des éléments, en correspondance des ergots, et dont chacune présente une dimension sensiblement égale à la moitié de la section transversale d'un ergot, de telle sorte que chaque élément peut être assemblé par engagement de son angle d'assemblage entre deux ergots adjacents et encliquetage de ces encoches sur ces ergots.

La pièce d'assemblage ou la pièce de verrouillage peuvent porter un organe de préhension facilitant les déplacements de la plaque après assemblage.

De toute façon, l'invention sera bien comprise à l'aide de la description qui suit, en référence au dessin schématique annexé représentant, à titre d'exemples non limitatifs, plusieurs formes de réalisation de ces moyens.

Figures 1 à 3 en sont respectivement des vues en perspective, perspective éclatée et coupe selon une première forme de réalisation ;

Figures 4 et 5 en sont des vues, respectivement en perspective éclatée et en coupe selon une seconde forme de réalisation ;

Figure 6 est une vue en perspective d'une troisième forme de réalisation, et ;

Figure 7 en est une vue de détail à échelle agrandie.

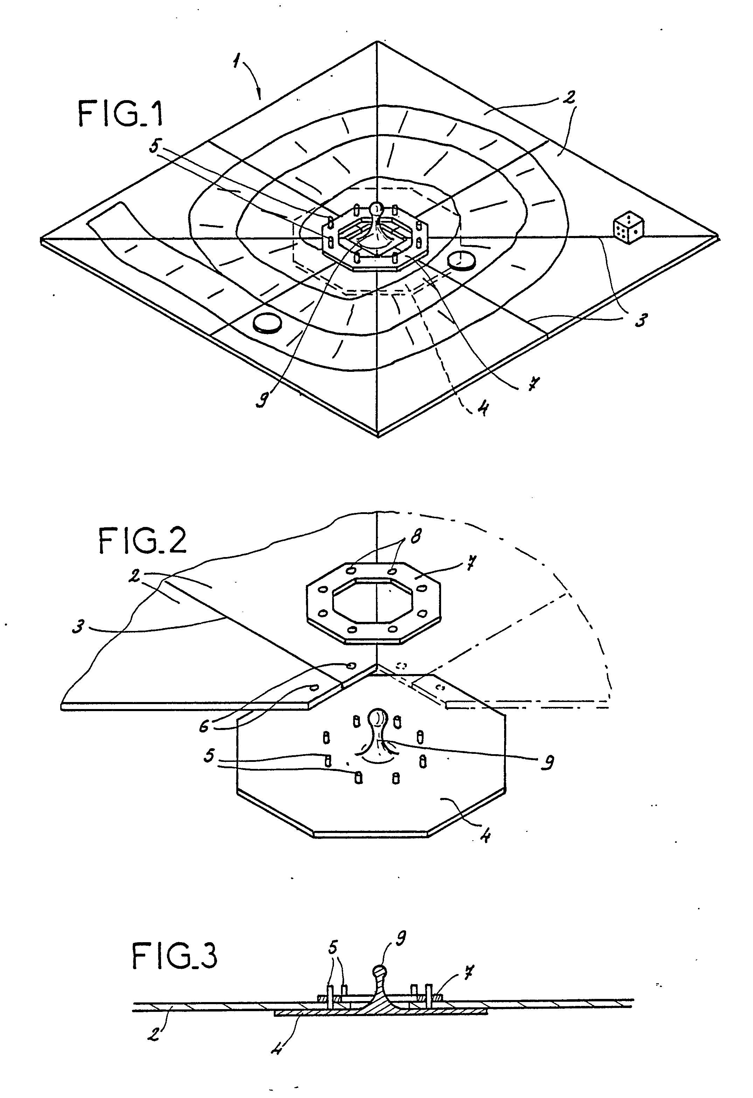

Les figures 1 à 3 représentent une plaque 1 d'un jeu de société constituée de huit éléments 2 ayant une forme telle que leurs lignes d'assemblage 3 convergent au centre de la plaque 1.

Une pièce d'assemblage 4 des éléments 2, ayant une forme plane et dont le centre coïncide avec le centre de la plaque 1, est munie de huit doigts d'accrochage 5 qui lui sont solidaires, et qui sont en saillie perpendiculaire par rapport à son plan. Les doigts d'accrochage 5 sont régulièrement espacés et disposés selon un cercle dont le centre coïncide avec le centre de la pièce 4, et sont engagés en force dans des trous 6 ménagés dans les éléments 2 à mi-distance de leurs bords d'assemblage, trous 6 qui correspondent aux doigts 5 quand les éléments 2 sont correctement positionnés les uns par rapport aux autres. En outre, une pièce de verrouillage 7 présentant la même forme extérieure que la pièce d'assemblage 4, est munie de trous 8 ayant la même répartition que les doigts d'accrochage 6 sur la pièce 4, de manière à être engagés en force sur chacun de ceux-ci jusqu'à ce que les faces en vis-à-vis de la pièce de verrouillage 7 et des éléments 2 soient au contact l'une de l'autre, comme cela est plus particulièrement visible sur la figure 3. Un organe de préhension 9, situé au centre de la pièce 4, est solidaire de celle-ci. La pièce de verrouillage 7 est évidée en son centre de manière à permettre le passage de l'organe de préhension 9.

La pièce 4 peut porter autant de doigts d'accrochage 5 que la plaque comporte d'éléments 2 dont les dimensions peuvent être ainsi réduites. L'assemblage obtenu est efficace, sans jeu possible entre les éléments 2 et les pièces 4 et 7.

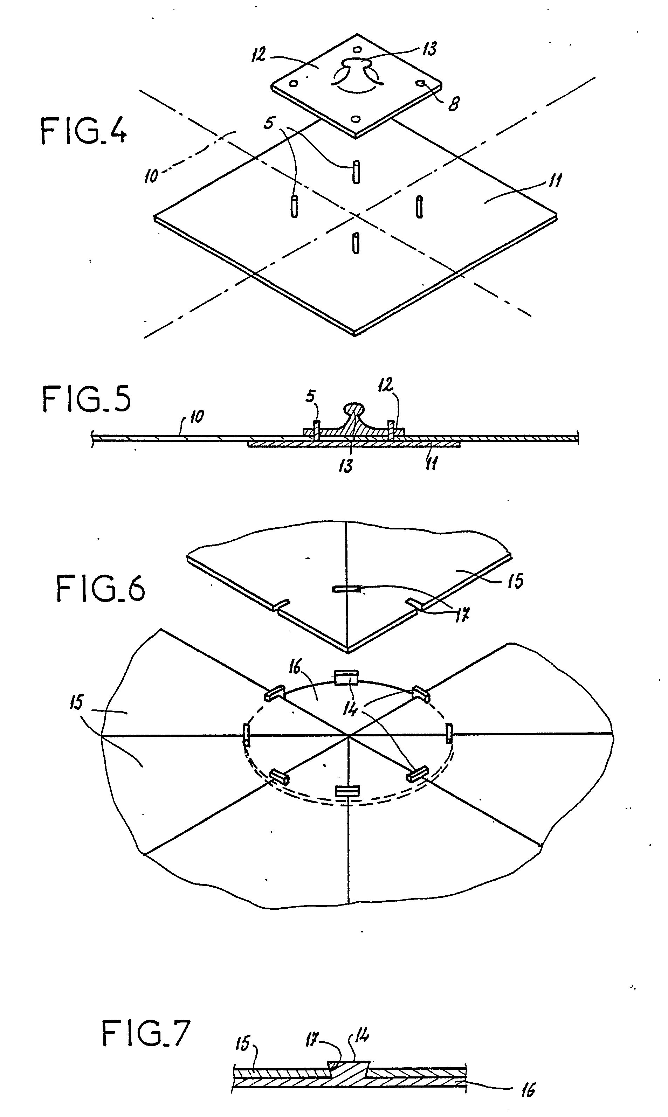

Les figures 4 et 5 représentent une deuxième forme de réalisation, dans laquelle les éléments précédemment décrits se retrouvent, et sont désignés par les mêmes références, qui ne diffère de la première forme de réalisation décrite que par le fait qu'il n'y a que quatre éléments 10 constituant la plaque, que les pièces d'assemblage 11 et de verrouillage 12 ont une forme carrée, et que l'organe de préhension 13 est porté par la pièce de verrouillage 12.

Les figures 6 et 7 sont des vues d'une troisième forme de réalisation de l'invention dans laquelle la pièce d'assemblage 16 est munie d'ergots 14 saillants perpendiculairement à son plan et régulièrement disposés à sa périphérie. Les éléments 15 constituant la plaque comprennent des encoches 17 sur leurs bords d'assemblage en correspondance des ergots. Chaque encoche 17 présente une dimension sensiblement égale à la moitié de la section transversale d'un ergot 14, de telle sorte que chaque élément 15 peut être assemblé par engagement de son angle d'assemblage entre deux ergots 14 adjacents et encliquetage de ces encoches 17 sur les ergots 14.

## Revendications

1 - Moyens d'assemblage des éléments d'une plaque rigide ou semi-rigide, caractérisés en ce qu'ils comprennent une pièce d'assemblage (4,11,16) dont le centre est destiné à coïncider avec le centre de la plaque (1) et qui porte autant d'organes d'accrochage (5,14) que la plaque (1) comporte d'éléments (2,10,15), organes d'accrochage (5,14) qui sont aptes à coopérer avec des organes d'accrochage complémentaires (6,17) solidaires des éléments (2,10,15), ces derniers ayant une forme telle que leurs lignes d'assemblage convergent au centre de la plaque (1).

2 - Moyens selon la revendication 1, caractérisés en ce qu'ils comprennent une pièce de verrouillage (7,12), en position assemblée, des éléments (2,10) de plaque (1).

3 - Moyens selon la revendication 1 et/ou 2, caractérisés en ce que les organes d'accrochage sont constitués par des doigts (5) en saillie sur l'une des faces de la pièce d'assemblage (4,11) perpendiculairement à celle-ci, et l'organe d'accrochage complémentaire dont est pourvu chaque élément (2,10) est constitué par un trou (6) engageable, en force sur l'un des doigts (5) précités lorsqu'il est positionné correctement par rapport aux autres éléments de la plaque.

4 - Moyens selon la revendication 2 et/ou 3, caractérisés en ce que la pièce de verrouillage (7,12) présente la même forme que la pièce d'assemblage (4,11) ou une forme similaire et en ce qu'elle est munie de trous (8) ayant la même répartition que les doigts d'accrochage (5) portés par la pièce d'assemblage (4,11) et dont chacun est destiné à être engagé en force sur l'un d'eux jusqu'à ce que les faces en vis-a-vis de la pièce de verrouillage (7,12) et des éléments (2,10) soient au contact l'une de l'autre.

5 - Moyens selon la revendication 1 et/ou 2, caractérisés en ce que les organes d'accrochage de la pièce d'assemblage (16) sont constitués par des ergots (14) saillants perpendiculairement à son plan et régulièrement disposés à sa périphérie, et les organes d'accrochage complémentaires des éléments (15) de la plaque sont constitués par des paires d'encoches (17) ménagées sur les bords d'assemblage des éléments (15), en correspondance des ergots (14), et dont chacune présente une dimension sensiblement égale à la moitié de la section transversale d'un ergot (14), de telle sorte que chaque élément (15) peut être assemblé par engagement de son angle d'assemblage entre deux ergots (14) adjacents et encliquetage de ces encoches (17) sur ces ergots (14).

6 - Moyens selon l'une des revendications 1 à 5, caractérisés en ce que la pièce d'assemblage (4) porte un organe de préhension (9).

7 - Moyens selon l'une des revendications 2 à 5, caractérisés en ce que la pièce de verrouillage (12) porte un organe de préhension (13).

FIG.1

FIG.2

FIG.3

FIG.4

FIG.5

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-1118907 (LES SPECIALITES)<br>* page 1, colonne de droite, alinéa 9; figures 1-5 *<br>--- | 1 | F16B5/07 |
| A | FR-A-1393399 (PIGET)<br>* page 2, colonne de gauche, alinéa 17 - colonne de droite, ligne 39; figures 1-3 *<br>----- | 1 | |

DOMAINES TECHNIQUES RECHERCHES (Int. Cl.5 )

F16B

Le présent rapport a été établi pour toutes les revendications

| Lieu de la recherche | Date d'achèvement de la recherche | Examinateur |
|---|---|---|
| BERLIN | 06 JUILLET 1990 | BLURTON M.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P0402)